# EUROPEAN PATENT SPECIFICATION

(11) **EP 3 329 585 B1**
(45) Date of publication and mention of the grant of the patent: **04.09.2019**
(21) Application number: 16741322.8
(22) Date of filing: 21.07.2016
(51) Int. Cl.: H02M 7/487

(54) **HYBRID MODULAR MULTI-LEVEL CONVERTER**
HYBRIDER MODULARER MEHRSTUFENUMRICHTER
CONVERTISSEUR HYBRIDE MODULAIRE MULTI-NIVEAUX

(30) Priority: 31.07.2015 EP 15179217
(43) Date of publication of application: 06.06.2018
(73) Proprietor: ABB Schweiz AG, 5400 Baden (CH)
(72) Inventor: SCHWEIZER, Mario, 8057 Zürich (CH); STEIMER, Peter, 5420 Ehrendingen (CH); DIJKHUIZEN, Frans, 72631 Västerås (SE)
(74) Representative: Qip Patentanwälte Dr. Kuehn & Partner mbB
(86) International application number: PCT/EP2016/067415
(87) International publication number: WO 2017/021169

(56) References cited:
- EP-A2- 2 840 699
- WO-A1-2013/135277
- WO-A1-2015/115535
- DE-A1-102011 006 345

## Description

### FIELD OF THE INVENTION

The invention relates to the field of high power electronics. In particular, the invention relates to a modular multi-level converter and to a method for operating the modular multi-level converter.

### BACKGROUND OF THE INVENTION

Modular multi-level converters usually comprise arms with series-connected converter cells, which have their own cell capacity. By switching the converter cells such that only a part of the cell capacitors are connected to the arm, a multi-level output voltage may be generated.

The topology of a modular multi-level converter has some key features that makes it interesting for medium voltage applications. These are excellent voltage scalability, modularity, redundancy and the high quality voltage output with low THD. Due to a redundancy of converter cells, down-time of a converter may be reduced. For medium voltage drive applications, the voltage scalability and the high quality output voltage are very favorable.

Nevertheless, because of the high number of converter cells, related auxiliary circuits and the required high energy storage in the expensive cell capacitors, a modular multi-level converter is usually very costly compared to conventional topologies used for medium voltage drive applications, such as 3-level NPC or ANPC converters.

Additionally, the physical setup of a modular multi-level converter usually needs much space due to the high number of converter cells. This may be a problem in many applications, where a small footprint is important such as for marine or wind generators.

A further problem may arise for drive applications during startup of a machine driven by a modular multi-level converter, where often low speed and rather high currents are required. The required cell capacity is directly related to the fundamental output frequency and the output current. In general, the cell voltage ripple increases for low fundamental frequency, and higher cell capacity would be required to keep the ripple below a maximum value. Therefore, often current derating is applied for low speed operation.

To reduce the number of cells and stored energy, several solutions have been proposed.

For example, CA 2 827 664 A1 shows a multi-level converter system, with a string of converter cells connected across four medium voltage director switches.

EP 2755315 A1 shows a hybrid modular multi-level converter with parallel switches, which may be operated in quasi 2-level operation.

In EP 2 840 699 A2 a generic modular multi-level converter is disclosed.

Furthermore, WO 2013/135277 A1 shows a clamped modular power converter and in DE 10 2011 006 345 A1 a modular multi-level converter with different embodiments of switching cells is disclosed.

### DESCRIPTION OF THE INVENTION

It is an object of the invention to provide a low cost modular multi-level converter generating an output voltage with low harmonic distortion. Further objects of the invention are to provide a low cost modular multi-level converter with a small footprint and/or a low cost modular multi-level converter that may be operated with low speed.

This objective is achieved by the subject-matter of the independent claims. Further exemplary embodiments are evident from the dependent claims and the following description.

A first aspect of the invention relates to a modular multi-level converter for converting a DC voltage into an AC voltage (or vice versa). The converter may be used in a medium voltage drive (between 1 kV and 20 kV), for example for driving an electrical motor coupled to a turbine, pump, etc. However, it also may be possible that the converter is used to interconnect to grids and/or that the converter is a high voltage converter (more than 20 kV).

According to an embodiment of the invention, the modular multi-level converter comprises a first row and a second row of converter cells, each converter cell comprising a cell capacitor and semiconductor switches adapted for connecting the cell capacitor to an output of the converter cell and for bypassing the cell capacitor. The first row of converter cells interconnects a positive DC link connection point and a negative DC link connection point and comprises an upper pair and a lower pair of series-connected strings of series-connected converter cells. The four strings of converter cells may be connected in parallel to a pair of DC link capacitors. For example, the DC link capacitors and the DC link connection points may be supplied by a rectifier, which is supplied by an electrical grid.

The upper pair of strings connects the positive DC link connection point with a neutral DC link connection point and provides an upper intermediate connection point between the strings and the lower pair of strings connects the negative DC link connection point with the neutral DC link connection point and provides a lower intermediate connection point between the strings. In such a way, the four strings of converter cells of the first row connect (in this order) the positive DC link connection point with the upper intermediate connection point, the neutral DC link connection point, the lower intermediate connection point and the negative DC link connection point.

The second row of converter cells comprises a pair of strings of series-connected converter cells interconnecting the upper intermediate connection point and the lower intermediate connection point and provides an AC connection point between the strings. The AC connection point may provide one phase of an AC output voltage of the converter. A multi-phase converter (for example with three phases) may comprise three legs of a first row and a second row of converter cells interconnected as described above.

The proposed converter topology is completely modular, is scalable in voltage and redundancy can be implemented on converter cell level. As will be explained below, the total stored converter cell energy may be reduced by at least 40%, the number of power modules may be approximately reduced by 25% and/or the power density may be approximately increased by 33% compared to a conventional modular multi-level converter.

According to the invention, the converter cells of the first row have a first cell capacity and the converter cells of the second row have a second cell capacity higher than the first cell capacity. The converter cells of the first row may be seen as light cells and the converter cells of the second row may be seen as normal cells. The normal cells may have the same cell capacity and the same current rating as a converter cell of a conventional modular multi-level converter.

On the other hand, the light cells may have a much smaller cell capacity, since the light cells may operate in quasi 2-level mode. This may mean that the light cells of a string, except during a short transition time window, are either connected or disconnected to the first row as a whole. The cell capacity of the light cells may be used only for energy exchange during commutation. This cell capacity may be much lower than the usual capacity necessary for normal cells.

According to an embodiment of the invention, the first cell capacity is less than 20%, for example less than 10% of the second cell capacity. Simulations with the topology described above show that 10% - 20% of usual cell capacity is sufficient. Real tests indicate that this relation even may be smaller, for example, less than 5%.

According to the invention, the (light) converter cells of the first row have a capacitor switch, which interconnects the cell capacitor with the outputs and which has a lower current rating than a main switch of the converter cells of the first row connected in parallel to the cell capacitor. Furthermore, in the light cells, the switches (which are semiconductor switches such as IGBTs or ICGTs) may be used in an asymmetric way. Only the main switch (bypass switch) may have to be dimensioned for the nominal current. The capacitor switch (commutation switch) may be designed for a much lower current because current flows through it only during the commutation period. As the light cells may be switched only with fundamental frequency, the average and rms current through the capacitor switch may be very low.

According to an embodiment of the invention, a light converter cell (converter cell of the first row) comprises a main switch in the form of an IGCT and a capacitor switch in the form of an IGBT. For a light converter cell, the main switch and the capacitor switch may be implemented with different semiconductor types.

According to the invention, the converter cells of the second row have a capacitor switch and the current rating of the capacitor switch of a converter cell of the first row is smaller than a current rating of the capacitor switch of a converter cell of the second row.

The capacitor and the main switch of a normal cell may be designed for the same current rating as the main switch of a light cell.

According to an embodiment of the invention the current rating of the capacitor switch of a converter cell of the first row is smaller than a current rating of a main switch of a converter cell of the second row.

It has to be understood that the light cells may be designed equally and also the normal cells may be designed equally (but differently from the light cells).

According to an embodiment of the invention, the (light) converter cells of the first row comprise a cell resistor, which is connected in series with the cell capacitor. For example, this resistor may be connected in series with the capacitor switch, connected in series with a freewheeling diode in parallel with the capacitor switch or in parallel with the freewheeling diode. This resistor may control the loading of the cell capacitor and/or may limit the current through the capacitor switch.

According to an embodiment of the invention, the converter cells of the second row are unipolar cells or bipolar cells. A unipolar cell may have two switches, whereas a bipolar cell may have four switches. A bipolar cell may connect the cell capacitor additionally in reverse direction to the outputs of the cell. The unipolar or bipolar normal converter cells of the second row may be switched analogously to converter cells of a conventional modular multi-level converter.

According to an embodiment of the invention, a string of converter cells of the first row and a string of converter cells of the second row have an equal number of converter cells. In such a way, the voltage rating of the strings may be equal. Since the second row of converter cells only may have to produce a voltage magnitude half as high as the first row, the second row only may have half of the converter cells of the first row.

According to an embodiment of the invention, DC link capacitors interconnect the positive DC link connection point and the negative DC link connection point with the neutral DC link connection point. In other words, there may be a pair of DC link capacitors connected in parallel to the upper and lower pair of strings of converter cells of the first row.

According to an embodiment of the invention, two (light) converter cells of the first row are arranged in a power module providing a common mechanical support for the two converter cells. A power module or power electronic building block may exchange as a whole during maintenance of the converter. Since the light cells may be designed much smaller as the normal cells, two of them may occupy the same space as a normal cell.

In general, two switches of a normal half-bridge cell may be placed in two light cells and augmented with a small capacitor switch. The total semiconductor area is then only slightly increased compared to a normal cell, especially if it is considered that the light cells switch only with fundamental frequency and therefore have nearly no switching losses.

In general, the converter may be assembled of power modules, each comprising one or more converter cells. For example, a further type of power module may comprise one normal cell.

According to an embodiment of the invention, the power module with two light cells comprises a first half-bridge module of low current semiconductor switches and a second half-bridge of high current semiconductor switches, the low current semiconductor switches having a lower current rating than the high current semiconductor switches, wherein the half-bridges are interconnected with two cell capacitors such that the two low current semiconductor switches form two capacitor switches for interconnecting the respective cell capacitor switch with the output of the power module. The power modules with two light cells may be implemented as an asymmetric twin-cell with two standard half-bridge modules.

According to an embodiment of the invention, a bypass switch is connected in parallel to two or more converter cells of the first row. In many applications it would be favourable to achieve higher converter efficiency, what may be achieved by connecting a bypass switch with higher blocking voltage across several of the series-connected light cells and turn it on whenever all series connected light cells are turned on (bypassed), and turn it off just before the light cells change state. Such a bypass switch may be an IGCT or another low on-state semiconductor.

A bypass switch may reduce the conduction losses without adding additional switching losses. The light cells may also work as static voltage balancing network, therefore several bypass switches may be connected in series for high voltage applications. Switching and voltage sharing may be done by the light cells completely, the bypass switch only may reduce the conduction losses. No special dynamic voltage balancing gate drive unit may be necessary.

According to an embodiment of the invention, a converter cell of the first row and/or of the second row and/or a power module with two or more converter cells has a bypass element for bypassing faulty converter cells. Such a bypass element may be used for providing redundancy. Also, such a bypass element may be or may comprise a thyristor, a relay, and/or a pyrotechnical bypass element.

A further aspect of the invention relates to a method of operating the converter as described in the above and in the following. For example, the method may be performed by a controller of the converter. The method may be implemented in software and may be executed on a processor of the controller. It also may be possible that the method is at least partially implemented in hardware, for example in an FPGA or a DSP.

It has to be understood that features of the method as described in the above and in the following may be features of the converter as described in the above and in the following, and vice versa.

According to an embodiment of the invention, the method comprises: switching the upper pair of strings of converter cells of the first row such that during a first half period, the upper intermediate connection point is connected to the positive DC link connection point and during a second half period is connected to the neutral DC link connection point, such that the voltage at the upper intermediate connection point switches between a positive DC link voltage and a neutral DC link voltage; and switching the lower pair of strings of converter cells of the first row such that during the first half period, the lower intermediate connection point is connected to the neutral DC link connection point and during the second half period is connected to the negative DC link connection point, such that the voltage at the lower intermediate connection point switches between a negative DC link voltage and a neutral DC link voltage.

In other words, the first row of (light) converter cells may be operated in substantially a 2-level operation mode. In a first half period, the second row is connected between the positive and the neutral DC link voltage, in the second half period, the second row is connected between the neutral and negative DC link voltage. In such a way, the second row is shifted up and down with respect to half of the DC link voltage.

According to an embodiment of the invention, the method comprises: switching the pair of strings of the second row such that during each half period, a voltage in the form of sinusoidal half wave is formed between the upper intermediate connection point and the AC connection point and a voltage in the form of a opposite sinusoidal half wave is formed between the lower intermediate connection point and the AC connection point, which voltages are shifted by the switching of the upper pair of strings and the lower pair of strings of the first row, such that in sum a voltage in the form of a sinusoidal wave is formed at the AC connection point.

The second row of (normal) converter cells generates in each half period a waveform that has a magnitude of only half of the DC link voltage. For example, in the first half period, the positive part of a sinusoidal waveform is produced. The sinusoidal waveform is then shifted up to a maximum of the positive DC link voltage by the first row. Analogously, during the second half period, a waveform with a magnitude of half of the DC link voltage is shifted down to a minimum of the negative DC link voltage.

According to an embodiment of the invention, during a transition time window between the first half period and the second half period, a voltage waveform generated at the upper intermediate connection point and the lower intermediate connection point by the converter cells of the first row slopes up or down. During the transition time window, the converter cells of the second row are switched such that their generated waveforms slope down or up to at least partially cancel with the voltage waveforms at the upper intermediate connection point and the lower intermediate connection point.

The switching of light cells and normal cells may easily be synchronized, so that no high voltage spikes appear at the phase output. To achieve this, the converter cells of the first row are switched that the voltage waveform at the upper and lower intermediate connection point slopes up or down simultaneously. Furthermore, the voltage waveform produced by the second row of cells slopes in the opposite direction to compensate for the change in the voltages at the upper and lower intermediate connection point.

Note that the light cells are only switched during the transition time window, which may be much smaller than a period of the waveform. The transition time window may only be a small multiple of the step period of the controller, for example the carrier frequency of a PWM (pulse width modulation) scheme of the converter.

According to an embodiment of the invention, during the transition time window, the voltage waveform at the upper intermediate connection point and at the lower intermediate connection point has a staircase-shaped form and/or the waveform generated by the second row of converter cells has a staircase-shaped form. This may be achieved by switching one cell of each row, for example at every time step.

To synchronize the converter cells of the first row and the second row, the converter cells of the first row may be switched simultaneously with a switching scheme of the second row.

For example, the converter cells of the first row may be switched at zero-crossing of carrier signals of PWM modulated converter cells of the second row.

The converter cells of the second row may be switched with a PWM modulation scheme with multiple carrier signals for multiple cells. The converter cells of the first row may be switched during the transition time window, whenever one of the carrier signals has a zero-crossing.

According to an embodiment of the invention, the converter cells of the first row are switched based on a sorting list, which is sorted such that a switching order of the converter cells reduces cell voltage imbalances of the converter cells. In case of staircase switching of the (light) converter cells of the first row, the switching order may be determined with a sorting list. The sorting may be based on a measured output current and/or arm currents, such that the voltage balance of the (light) converter cells of the first row may be maintained.

Furthermore, the modular multi-level converter may be operated in a 3-level operation mode, in which the converter cells of the second row may be switched simultaneously. This operation mode may be performed, if low frequency and high current operation (such as during stand-still torque, high starting torque, low speed operation) is required. It is further possible to generate trapezoidal waveforms with the second row of converter cells to increase the output voltage fundamental.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a modular multi-level converter according to an embodiment of the invention.
Fig. 2 schematically shows a normal unipolar converter cell for the converter of Fig. 1.
Fig. 3 schematically shows a normal bipolar converter cell for the converter of Fig. 1.
Fig. 4 schematically shows a light converter cell for the converter of Fig. 1.
Fig. 5 schematically shows a light converter cell for the converter of Fig. 1.
Fig. 6 schematically shows a light converter cell for the converter of Fig. 1.
Fig. 7 schematically shows a power module for the converter of Fig. 1.
Fig. 8 illustrates a method for operating a modular multi-level converter according to a further embodiment of the invention.
Fig. 9 shows a diagram illustrating staircase-shaped voltage waveforms used in the method of Fig. 8.
Fig. 10 shows a diagram illustrating switching times for light converter cells used in the method of Fig. 8.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

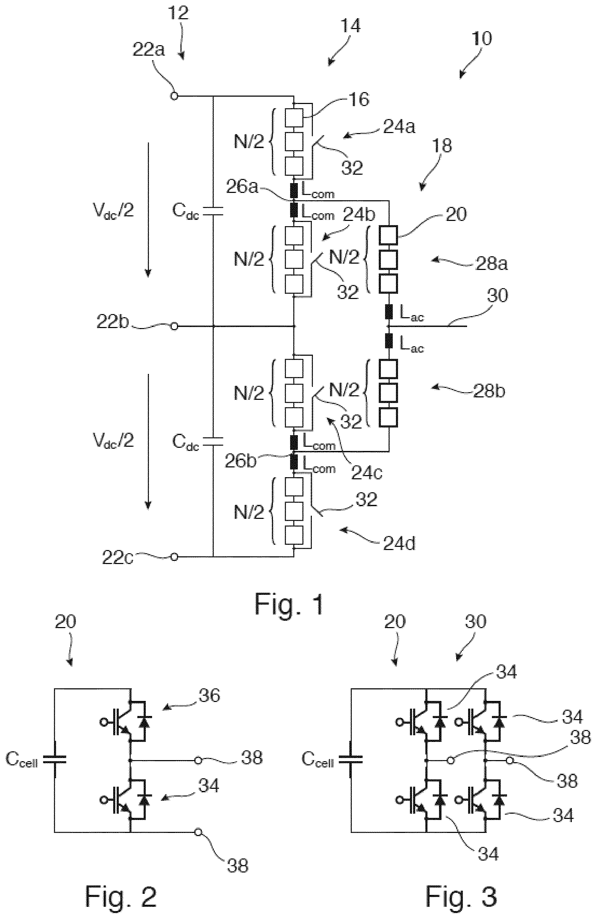

Fig. 1 shows a modular multi-level converter 10 comprising a DC link 12, a first row 14 of "light" converter cells 16 and a second row 18 of "normal" converter cells 20.

The DC link 12 provides a positive DC link connection point 22a, a neutral DC link connection point 22b and a negative DC link connection point 22c. The connection points 22a, 22b, 22c may be interconnected with two DC link capacitors C_{dc} connected in series, which are connected in parallel to the first row 14. The DC link connection points 22a, 22c may be connected to a rectifier that, for example, may be supplied by an electrical grid.

During operation of the converter 10, the DC link 12 may provide a DC link voltage V_{dc} between the connection points 22a, 22c and half of the DC link voltage V_{dc}/2 between the connection points 22a, 22b and 22b, 22c.

The first row 14 comprises 4 strings/chains 24a, 24b, 24c, 24d of series connected light cells 16. Each string 24a, 24b, 24c, 24d comprises the same number N/2 of light converter cells. An upper pair of strings 24a, 24b is connected in parallel to the upper DC link capacitor C_{dc} and provides an upper intermediate connection point 26a between the strings 24a, 24b. A lower pair of strings 24c, 24d is connected in parallel to the lower DC link capacitor C_{dc} and provides a lower intermediate connection point 26b between the strings 24c, 24d.

The second row 18 of normal converter cells 20 comprises a pair of strings 28a, 28b of normal converter cells 20, which is interconnected between the upper and lower intermediate connection points 26a, 26b. Between the pair of strings 28a, 28b, an AC output 30 of the converter 10 is provided.

In the case of a converter 10 with a multi-phase output, the converter comprises rows 14 and 18 interconnected in this way for every phase, which may be connected to a common DC link 12.

Every string 24a, 24b, 24c, 24d may comprise an optional arm inductor L_{com}, which is connected in series with the converter cells 16. For example, the arm inductors L_{com} may be arranged besides the intermediate connection points 26a, 26b. Analogously, the strings 28a, 28b may comprise an inductor L_{ac}, which is connected in series with the converter cells 20 and/or which may be arranged besides the AC output 30. Both or one of the inductors L_{com} and L_{ac} may be implemented as distributed inductors in the cells 16, 20, as external inductors or as coupled inductors. L_{com} may be very small and/or may only be a parasitic loop inductance.

Furthermore, two or more light converter cells 16 of the first row 14 may be bypassed by a bypass switch 32, which may be connected in parallel to these cells 16. For example, the bypass switch 32 may bypass a complete string 24a, 24b, 24c, 24d. The bypass switch 32 may comprise one or more series connected semiconductor switches such as ICGTs.

The converter cells 20 are called normal cells, since they may be designed like converter cells of a conventional converter. They may have switches of equal current rating and a cell capacitor with a cell capacity adapted for conventional switching.

Fig. 2 shows a unipolar (half-bridge) converter cell that may be used as a normal converter cell 20 in the second row 18 of the converter 10. The converter cell 20 has a cell capacitor C_{cell}, a main switch 34 and a capacitor switch 36. The main switch 34 is adapted for bypassing the cell capacitor and short-circuiting the outputs 38 of the converter cell. The capacitor switch is adapted for connecting and disconnecting the cell capacitor C_{cell} to or from the outputs 38. The switches 34, 36 may comprise a semiconductor switch in parallel to a freewheeling diode.

Fig. 3 shows a (full-bridge) bipolar cell 20 with four switches 34, which are adapted to connect the cell capacitor C_{cell} in both directions with the outputs 38. Bipolar cells 20 may allow for improved capacitor voltage ripple reduction.

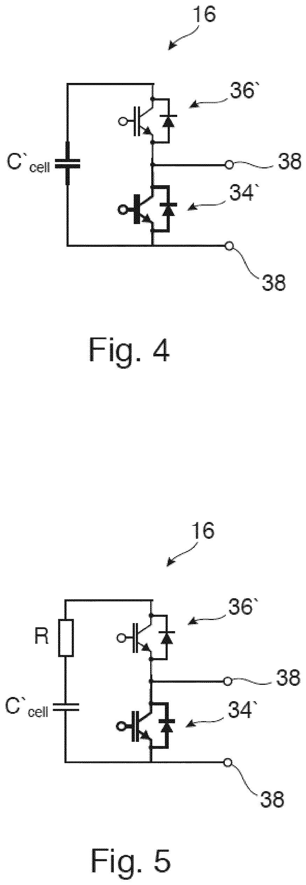

Fig. 4 shows a light cell 16 that may be used in the first row 14 of the converter 10. The light cell 16, which may have a circuit analogue to the cell 20 of Fig. 2, has a cell capacitor C_{cell}' as well as a main switch 34' and a capacitor switch 36'.

The converter cells 16 are called light converter cells, since they may have a cell capacitor C_{cell}' with a smaller cell capacity than the cell capacitor C_{cell} of a normal cell. Furthermore, the current rating of the capacitor switch 36' may be lower than the current rating of the main switch 34' and the current ratings of the switches 34, 36 of a normal cell 20.

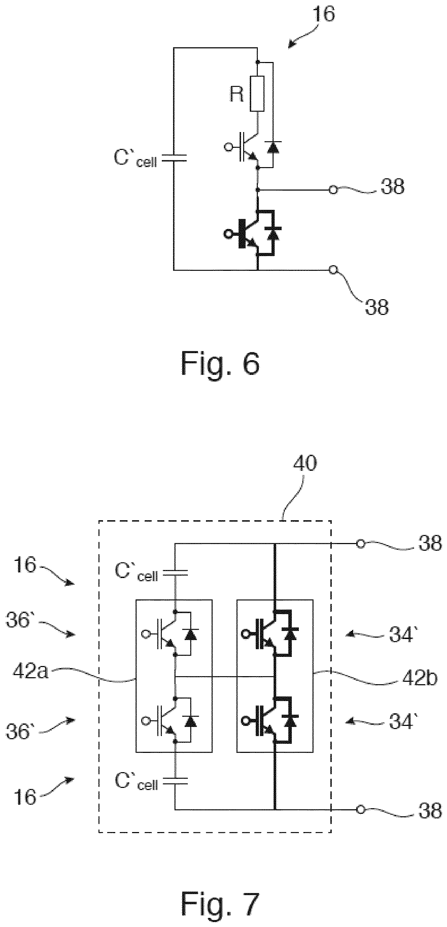

As shown in Fig. 5 and 6, a light converter cell 16 may additionally comprise a cell resistor R in series with the cell capacitor C_{cell}'. The resistor R may be connected in series with the capacitor switch 36' (Fig. 5) and/or only with the semiconductor switch of the switch 36', i.e. in parallel with the freewheeling diode.

For a standard modular multi-level converter, if no redundancy is required, usually N normal cells per branch are installed, resulting in 2N cells per phase and 6N for a 3-phase converter. For a given DC link voltage V_{dc}, each cell has a cell voltage of V_{cell}=V_{dc}/N. If all cell voltages are added up, a total voltage of 2V_{dc} per phase is achieved. With this setup, and without using intermediate voltage levels, a total of N+1 voltage levels can be generated (phase to neutral) at the output. Furthermore, for a standard modular multi-level converter, the total capacity per phase is given by Cₜₒₜ = 2^{∗}N^{∗}C_{cell}.

Returning to Fig. 1, the converter 10 comprises N normal converter cells 20 and 2N light converter cells 16 per phase. The N normal cells 20 are arranged such that they may be connected via the first row 14 either to the upper half DC link voltage or to the lower half DC link voltage. In general, only a voltage of V_{dc}/2 is applied between the upper and lower intermediate connection points 26a, 26b and therefore only N normal converter cells 20 are required (compared to 2N normal converter cells that would have to be used in a standard modular multi-level converter).

Simulations show that 10% to 20% of the cell capacity C_{cell} for a normal cell 20 are only necessary for the light converter cells 16 (C_{cell}' = 0.1^{∗}C_{cell}). Therefore, the totally installed capacity and the total stored energy reduces to Cₜₒₜ = N C_{cell} + 2N ^{∗}0.1 ^{∗}C_{cell} = 1.2^{∗}N^{∗}C_{cell}.

This is a reduction of at least 40% compared to a standard converter. Because all converter cells 16, 20 may have the same cell voltage, the stored energy also may reduce at least by 40%.

Fig. 7 shows a power module 40 or power electronics building block 40. The power module 40 may be a mechanically connected component of the converter 10 that may be exchanged as a whole.

In general, as the light cells 16 need only a small capacitor C_{cell}' and only a single nominal current switch 34', several light cells 16 may be packed into a single power module 40, which may reduce manufacturing costs.

The power module 40 comprises a half-bridge module 42a of low current switches 36' and a half-bridge module 42b of high current switches 34'. It has to be understood that "low" and "high" in this context may only mean that the current rating of the switches 36' is lower than the current rating of the switches 34'. The modules 42a, 42b may be assembled by soldering and/or sintering the corresponding switches together and after that, the modules 42a, 42b may be packed into the module 40 together with the two capacitors C_{cell}'.

Bypass elements (such as thyristors, relays, pyrotechnical bypasses) may be added across each combination of switches 34', 36' to have redundancy on cell level, or across the two or more cells in one module 40 to have redundancy on higher level.

The power module 40 for two or more light cells 16 may (nearly) have the same volume as a power module for a normal cell 20. As an example, it may be assumed that in a normal cell 20, the two switches 34, 36 require 30% of the module volume and the capacitors 70% of the module volume. Therefore, in this case, each nominal current switch 34, 36 (IGBT/diode combination) requires 15% of the module volume. A simple volume estimation shows that it is possible to pack four light cells 16 in a power module 40 of the same size as used for a normal cell 20. The four main switches 34' require about 60% of the module volume, the four capacitor switches 36' with reduced current rating (such as 1/3 of the nominal current rating) require about 20%, and the four light cell capacitors C_{cell}' require about 20% of the module volume.

If four light cells 16 are packed into a single power module 30, the number of power modules (together with the power modules for the normal cells 16) per phase reduces to N_{Module}= N + 2^{∗}N/4= 1.5^{∗}N. This is a reduction of 25% compared to a standard number of power modules. As all power modules (of the light cells 16 and the normal cells 20) may have the same volume, the converter power density may increase by 33%.

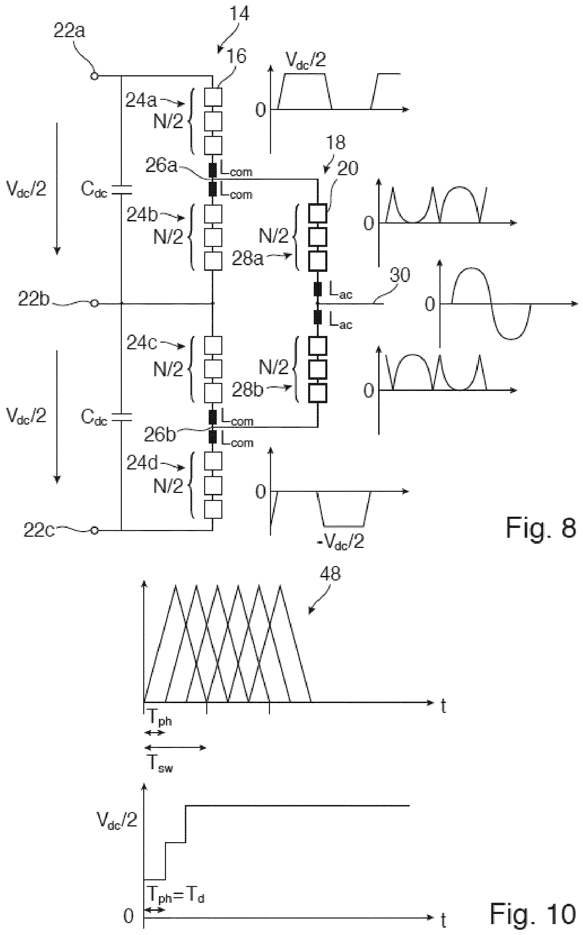

Fig. 8 illustrates the operation of the converter 10 and a method of operating the converter 10 will be described in the following.

The light converter cells 16 operate in quasi 2-level mode. All converter cells in a string 24a, 24b, 24c, 24d are either simultaneously in on or off-state (except during a small transition time window as will be described below).

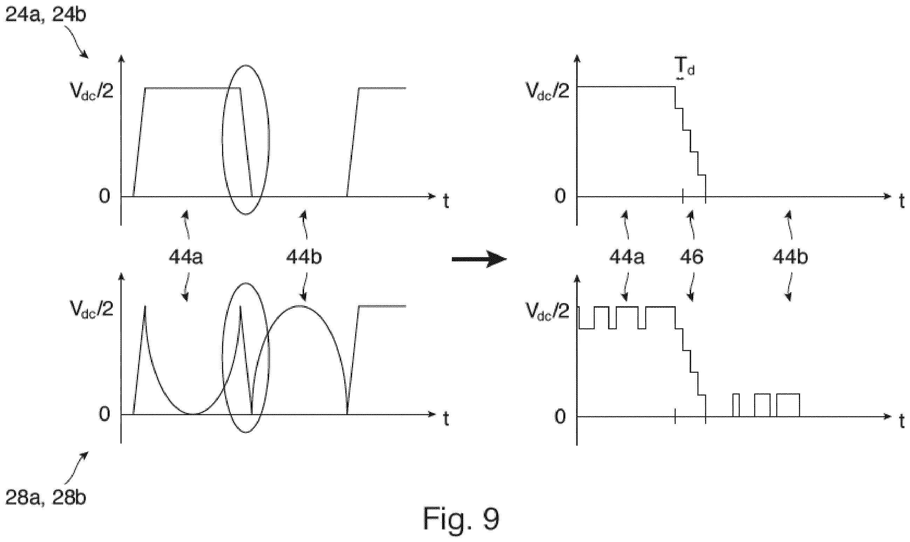

As also shown in Fig. 9, the upper pair of strings 24a, 24b are switched such that during a first half period 44a, the upper intermediate connection point 26a is connected to the positive DC link connection point 22a and during a second half period 44b is connected to the neutral DC link connection point 22b, such that the voltage at the upper intermediate connection point 26a switches between a positive DC link voltage V_{dc}/2 and a neutral DC link voltage 0.

With respect to the upper pair of strings 24a, 24b, current is flowing in one string only, except during the commutation process during the transition time window 46, when switching from V_{dc}/2 to 0 or vice versa. Then, during the transition time window (which is very short compared to the half periods 44a, 44b), current may flow in both strings 24a, 24b.

Analogously, the lower pair of strings 24c, 24d is switched such that during the first half period 44a, the lower intermediate connection point 26b is connected to the neutral DC link connection point 22b and during the second half period 44b is connected to the negative DC link connection point 22c, such that the voltage at the lower intermediate connection point 26b switches between a negative DC link voltage -V_{dc}/2 and a neutral DC link voltage 0.

The normal converter cells 20 may have high energy storage and may be operated as in a conventional modular multi-level converter. The current may be split to both strings 28a, 28b and a DC offset current flows through the converter cells 20. The same cell voltage balancing strategies as for a conventional converter may be applied.

In particular, the converter cells 20 may be switched such that during each half period 44a, 44b, a voltage in the form of a sinusoidal half wave is formed between the upper intermediate connection point 26a and the AC connection point 30 and a mirrored voltage is formed between the lower intermediate connection point 26b and the AC connection point 30 as indicated in Fig. 8. The voltage is shifted by the switching of the upper pair of strings 24a, 24b and the lower pair of strings 24c, 24d, such that in sum a voltage in the form of a sinusoidal wave is formed at the AC connection point 30.

To omit high voltage spikes at the AC connection point 30, with the converter 10, switching may easily be synchronized. This is done in general by switching the cells 16, 20 during a transition time window 46 between the half periods 44a, 44b in such a way that the slope of the voltage generated by the strings 24a-24d nearly equals a slope of the voltage generated by the strings 28a, 28b.

Fig. 9 shows the transition between the first half period 44a and the second half period 44b in more detail. The right voltage forms are a zoomed view of the left ones in the region of the ellipses.

The transition time window 46 is used to lower dv/dt. Before and after the transition time window, the light cells 16 of one string 24a-24d are either on and off altogether and the normal converter cells 20 are switched in a conventional way, for example with PWM (pulse width modulation). During the transition time window 46, a staircase-like waveform is generated.

The light converter cells 16 are switched to generate a staircase with step time T_{d}. This behaviour is replicated for the normal converter cells 40, which are also switched with the same staircase form to avoid voltage spikes at the AC output 30. The light converter cells 16 of each string 24a-24d may be switched based on a sorting list to lower cell voltage imbalances.

With respect to Fig. 10, one way to generate the switching signals of the normal converter cells 20 is using phase shifted carriers 48 for each converter cell 20 as shown in the upper diagram. The upper diagram shows triangular carrier signals 48 generating a maximal switching length of T_{sw}. The carrier signals 48 are phases shifted by a time shift Tₚₕ with respect to each other.

To synchronize the light converter cells 16 and the normal converter cells 20, the switching instants of the light converter cells 16 are set to the beginning of each carrier signal 48 of the normal converter cells 20, when the corresponding cell takes over the new modulation signal and shadows for a switching period (single update mode). A staircase with a small step period T_{d} corresponding to the time shift Tₚₕ in between the carrier signals 48 is generated.

If the step time T_{d} of the light converter cells 16 has to be further reduced, synchronization with the normal converter cells 20 may be achieved by adaptation of the normal cell modulation waveforms, as a low switching frequency of i.e. 500 Hz would lead to unnecessary high T_{d}.

Additionally, it is possible to minimize the DC link capacitors C_{dc} by modulating the circulating currents in the strings 28a, 28b. As there is (nearly) always a string 24a-24d connected to the top (or bottom) and another string 24a-24d connected to the bottom (or top) DC link capacitor C_{dc}, the current flowing into the neutral point 22b may be influenced by modulating the DC current components of the strings 28a, 28b in a periodic way.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 10: modular multi-level converter
- 12: DC link
- 14: first row
- 16: light converter cell
- 18: second row
- 20: normal converter cell
- 22a: positive DC link connection point
- 22b: neutral DC link connection point
- 22c: negative DC link connection point
- 24a: string
- 24b: string
- 24c: string
- 24d: string
- 26a: upper intermediate connection point
- 26b: lower intermediate connection point
- 28a: string
- 28b: string
- 30: AC output
- 32: bypass switch
- C_{dc}: DC link capacitor
- L_{com}: inductor
- L_{ac}: inductor
- 34: main switch
- 36: capacitor switch
- 38: output
- C_{cell}: cell capacitor
- 34': main switch
- 36': capacitor switch
- C_{cell}': cell capacitor
- R: cell resistor
- 40: power module
- 42a: half-bridge module
- 42b: half-bridge module
- 44a: first half period
- 44b: second half period
- 46: transition time window
- 48: carrier signal

## Claims

1. A modular multi-level converter (10) for converting a DC voltage into an AC voltage, wherein the modular multi-level converter (10) comprises a first row (14) and a second row (18) of converter cells (16, 20), each converter cell (16, 20) comprising an input and an output, called outputs (38), a cell capacitor (C_{cell}, C_{cell}') and semiconductor switches (34, 36, 34', 36') adapted for connecting the cell capacitor to an output of the converter cell (16, 20) and for bypassing the cell capacitor;
wherein the first row (14) of converter cells (16) interconnects a positive DC link connection point (22a) and a negative DC link connection point (22c);
wherein the first row (14) of converter cells (16) comprises an upper pair and a lower pair of series-connected strings (24a, 24b, 24c, 24d) of series-connected converter cells (16);
wherein the upper pair of strings (24a, 24b) connects the positive DC link connection point (22a) with a neutral DC link connection point (22b) and provides an upper intermediate connection point (26a) between the strings (24a, 24b);
wherein the lower pair of strings (24c, 24d) connects the negative DC link connection point (22c) with the neutral DC link connection point (22b) and provides a lower intermediate connection point (26b) between the strings (24c, 24d);
wherein the second row (18) of converter cells (20) comprises a pair of series-connected strings (28a,
28b) of series-connected converter cells (20) interconnecting the upper intermediate connection point (26a) and the lower intermediate connection point (26b) and provides an AC connection point between the strings (28a, 28b); **characterised in that** the converter cells (16) of the first row (14) have a first cell capacity (Ccell') and the converter cells (20) of the second row (18) have a second cell capacity (Ccell) higher than the first cell capacity (Ccell');
wherein the converter cells (16) of the first row (14) have a capacitor switch (36'), which is adapted to interconnect the cell capacitor (C_{cell}') with the outputs (38) and which has a lower current rating than a main switch (34') of the converter cells (16) of the first row (14), wherein the main switch is adapted to bypass the cell capacitor and short-circuit the outputs (38) of the converter cell (16);
wherein the converter cells (20) of the second row (18) have a capacitor switch (36) and the current rating of the capacitor switch (36') of a converter cell (16) of the first row (14) is smaller than a current rating of the capacitor switch (36) of a converter cell (20) of the second row (18).

2. The converter (10) of claim 1,
wherein the first cell capacity (C_{cell}') is less than 20% of the second cell capacity (C_{cell}).

3. The converter (10) of one of the preceding claims,
wherein the current rating of the capacitor switch (36') of a converter cell (16) of the first row (14) is smaller than a current rating of a main switch (34) of a converter cell (20) of the second row (18).

4. The converter (10) of one of the preceding claims,
wherein the main switch (34') of the converter cell (16) of the first row (14) is an IGCT and the capacitor switch (36') of the converter cell (16) of the first row (14) is an IGBT.

5. The converter (10) of one of the preceding claims,
wherein the converter cells (16) of the first row (14) comprise a cell resistor (R), which is connected in series with the cell capacitor (C_{cell}').

6. The converter (10) of one of the preceding claims,
wherein the converter cells (20) of the second row (18) are unipolar cells or bipolar cells.

7. The converter (10) of one of the preceding claims,
wherein a string (24a, 24b, 24c, 24d) of converter cells (16) of the first row (14) and a string (28a, 28b) of converter cells (20) of the second row (18) have an equal number of converter cells (16, 20).

8. The converter (10) of one of the preceding claims,
wherein DC link capacitors (C_{dc}) interconnect the positive DC link connection point (22a) and the negative DC link connection point (22c) with the neutral DC link connection point (22b).

9. The converter (10) of one of the preceding claims,
wherein two converter cells (16) of the first row (14) are arranged in a power module (40) providing a common mechanical support for the two converter cells (16); and/or wherein the power module (40) comprises a first half-bridge module of low current semiconductor switches (36') and a second half-bridge of high current semiconductor switches (34'), the low current semiconductor switches (36') having a lower current rating than the high current semiconductor switches (34');
wherein the half-bridges are interconnected with two cell capacitors (C_{cell}') such that the two low current semiconductor switches (36') form two capacitor switches for interconnecting the respective cell capacitor (C_{cell}') switch with the output (38) of the power module (40).

10. The converter (10) of one of the preceding claims,
wherein a bypass switch (32) is connected in parallel to two or more converter cells (16) of the first row (14); and/or
wherein a converter cell (16) of the first row (14) and/or a converter cell (20) of the second row (18) and/or a power module (40) with two or more converter cells (16, 20) has a bypass element for bypassing one or more faulty converter cells.

11. A method of operating the converter (10) of one of the preceding claims, the method comprising:
switching the upper pair of strings (24a, 24b) of converter cells (16) of the first row (14) such that during a first half period (44a), the upper intermediate connection point (26a) is connected to the positive DC link connection point (22a) and during a second half period (44b) is connected to the neutral DC link connection point (22b), such that the voltage at the upper intermediate connection point (26a) switches between a positive DC link voltage and a neutral DC link voltage;
switching the lower pair of strings (24c, 24d) of converter cells (16) of the first row (14) such that during the first half period (44a), the lower intermediate connection point (26b) is connected to the neutral DC link connection point (22b) and during the second half period (44b) is connected to the negative DC link connection point (22c), such that the voltage at the lower intermediate connection point (26b) switches between a negative DC link voltage and a neutral DC link voltage;
switching the converter cells (20) of the second row (18) such that during each half period (44a, 44b), a voltage in the form of sinusoidal half wave is formed between the upper intermediate connection point (26a) and the AC connection point (30) and between the lower intermediate connection point (26b) and the AC connection point (30), which voltages are shifted by the switching of the upper pair of strings (24a, 24b) and the lower pair of strings(24c, 24d) of the first row (14), such that in sum a voltage in the form of a sinusoidal wave is formed at the AC connection point (30).

12. The method of claim 11,
wherein during a transition time window (46) between the first half period (44a) and the second half period (44b), a voltage waveform generated at the upper intermediate connection point (26a) and the lower intermediate connection point (26b) by the converter cells (16) of the first row (14) slopes up or down; and
wherein the converter cells (20) of the second row (18) are switched such that their generated waveforms slope down or up, to at least partially cancel with the voltage waveforms at the upper intermediate connection point (26a) and the lower intermediate connection point (26b).

13. The method of claim 12,
wherein during the transition time window (46), the voltage waveform at the upper intermediate connection point (26a) and at the lower intermediate connection point (26b) has a staircase-shaped form and/or the waveform generated by the second row (18) of converter cells (20) has a staircase-shaped form;
wherein converter cells (16) of the first row (14) are switched at zero-crossing of carrier signals (48) of PWM modulated converter cells (20) of the second row (18).

14. The method of one of claims 11 to 13,
wherein the converter cells (16) of the first row (14) are switched based on a sorting list, which is sorted such that a switching order of the converter cells (16) reduces cell voltage imbalances.

## Patentansprüche

1. Modularer Multiniveauumrichter (10) zum Umrichten einer Gleichspannung in eine Wechselspannung, wobei der modulare Multiniveauumrichter (10) eine erste Reihe (14) und eine zweite Reihe (18) von Umrichterzellen (16, 20) umfasst, wobei jede Umrichterzelle (16, 20) einen Eingang und einen Ausgang, die Ausgänge (38) genannt werden, einen Zellkondensator (C_{cell}, C_{cell}') und Halbleiterschalter (34, 36, 34', 36'), die dafür ausgeführt sind, den Zellkondensator mit einem Ausgang der Umrichterzelle (16, 20) zu verbinden und den Zellkondensator zu überbrücken, umfasst;
wobei die erste Reihe (14) von Umrichterzellen (16) einen positiven Zwischenkreisanschlusspunkt (22a) und einen negativen Zwischenkreisanschlusspunkt (22c) miteinander verbindet;
wobei die erste Reihe (14) von Umrichterzellen (16) ein oberes Paar und ein unteres Paar von in Reihe geschalteten Ketten (24a, 24b 24c, 24d) von in Reihe geschalteten Umrichterzellen (16) umfasst;
wobei das obere Paar von Ketten (24a, 24b) den positiven Zwischenkreisanschlusspunkt (22a) mit einem neutralen Zwischenkreisanschlusspunkt (22b) verbindet und einen oberen Zwischenanschlusspunkt (26a) zwischen den Ketten (24a, 24b) bereitstellt;
wobei das untere Paar von Ketten (24c, 24d) den negativen Zwischenkreisanschlusspunkt (22c) mit dem neutralen Zwischenkreisanschlusspunkt (22b) verbindet und einen unteren Zwischenanschlusspunkt (26b) zwischen den Ketten (24c, 24d) bereitstellt;
wobei die zweite Reihe (18) von Umrichterzellen (20) ein Paar von in Reihe geschalteten Ketten (28a, 28b) von in Reihe geschalteten Umrichterzellen (20), die den oberen Zwischenanschlusspunkt (26a) und den unteren Zwischenanschlusspunkt (26b) miteinander verbinden, umfasst und einen AC-Anschlusspunkt zwischen den Ketten (28a, 28b) bereitstellt;
**dadurch gekennzeichnet, dass** die Umrichterzellen (16) der ersten Reihe (14) eine erste Zellkapazität (C_{cell}') aufweisen und die Umrichterzellen (20) der zweiten Reihe (18) eine zweite Zellkapazität (C_{cell}), die höher als die erste Zellkapazität (C_{cell}') ist, aufweisen;
wobei die Umrichterzellen (16) der ersten Reihe (14) einen Kondensatorschalter (36') aufweisen, der dafür ausgeführt ist, den Zellkondensator (C_{cell}') mit den Ausgängen (38) zu verbinden, und der eine niedrigere Strombelastbarkeit als ein Hauptschalter (34') der Umrichterzellen (16) der ersten Reihe (14) aufweist, wobei der Hauptschalter dafür ausgeführt ist, den Zellkondensator zu überbrücken und die Ausgänge (38) der Umrichterzelle (16) kurzzuschließen;
wobei die Umrichterzellen (20) der zweiten Reihe (18) einen Kondensatorschalter (36) aufweisen und die Strombelastbarkeit des Kondensatorschalters (36') einer Umrichterzelle (16) der ersten Reihe (14) kleiner als eine Strombelastbarkeit des Kondensatorschalters (36) einer Umrichterzelle (20) der zweiten Reihe (18) ist.

2. Umrichter (10) nach Anspruch 1, wobei die erste Zellkapazität (C_{cell}') niedriger als 20 % der zweiten Zellkapazität (C_{cell}) ist.

3. Umrichter (10) nach einem der vorstehenden Ansprüche, wobei die Strombelastbarkeit des Kondensatorschalters (36') einer Umrichterzelle (16) der ersten Reihe (14) kleiner als eine Strombelastbarkeit eines Hauptschalters (34) einer Umrichterzelle (20) der zweiten Reihe (18) ist.

4. Umrichter (10) nach einem der vorstehenden Ansprüche, wobei der Hauptschalter (34') der Umrichterzelle (16) der ersten Reihe (14) ein IGCT ist und der Kondensatorschalter (36') der Umrichterzelle (16) der ersten Reihe (14) ein IGBT ist.

5. Umrichter (10) nach einem der vorstehenden Ansprüche, wobei die Umrichterzellen (16) der ersten Reihe (14) einen Zellwiderstand (R) umfassen, der mit dem Zellkondensator (C_{cell}') in Reihe geschaltet ist.

6. Umrichter (10) nach einem der vorstehenden Ansprüche, wobei die Umrichterzellen (20) der zweiten Reihe (18) unipolare Zellen oder bipolare Zellen sind.

7. Umrichter (10) nach einem der vorstehenden Ansprüche, wobei eine Kette (24a, 24b, 24c, 24d) von Umrichterzellen (16) der ersten Reihe (14) und eine Kette (28a, 28b) von Umrichterzellen (20) der zweiten Reihe (18) eine gleiche Anzahl von Umrichterzellen (16, 20) aufweisen.

8. Umrichter (10) nach einem der vorstehenden Ansprüche, wobei Zwischenkreiskondensatoren (C_{dc}) den positiven Zwischenkreisanschlusspunkt (22a) und den negativen Zwischenkreisanschlusspunkt (22c) mit dem neutralen Zwischenkreisanschlusspunkt (22b) verbinden.

9. Umrichter (10) nach einem der vorstehenden Ansprüche, wobei zwei Umrichterzellen (16) der ersten Reihe (14) in einem Leistungsmodul (40) angeordnet sind, das einen gemeinsamen mechanischen Träger für die zwei Umrichterzellen (16) bereitstellt; und/oder wobei das Leistungsmodul (40) ein erstes Halbbrückenmodul von Niederstromhalbleiterschaltern (36') und eine zweite Halbbrücke von Hochstromhalbleiterschaltern (34') umfasst, wobei die Niederstromhalbleiterschalter (36') eine niedrigere Strombelastbarkeit als die Hochstromhalbleiterschalter (34') aufweisen;
wobei die Halbbrücken mit zwei Zellkondensatoren (C_{cell}') derart verbunden sind, dass die zwei Niederstromhalbleiterschalter (36') zwei Kondensatorschalter zum Verbinden des jeweiligen Schalters des Zellkondensators (C_{cell}') mit dem Ausgang (38) des Leistungsmoduls (40) bilden.

10. Umrichter (10) nach einem der vorstehenden Ansprüche, wobei ein Überbrückungsschalter (32) parallel mit zwei oder mehreren Umrichterzellen (16) der ersten Reihe (14) verbunden ist; und/oder
wobei eine Umrichterzelle (16) der ersten Reihe (14) und/oder eine Umrichterzelle (20) der zweiten Reihe (18) und/oder ein Leistungsmodul (40) mit zwei oder mehreren Umrichterzellen (16, 20) ein Überbrückungselement zum Überbrücken von einer oder mehreren fehlerhaften Umrichterzellen aufweist.

11. Verfahren zum Betreiben des Umrichters (10) nach einem der vorstehenden Ansprüche, das Verfahren umfassend:
Umschalten des oberen Paares von Ketten (24a, 24b) von Umrichterzellen (16) der ersten Reihe (14) derart, dass der obere Zwischenanschlusspunkt (26a) während einer ersten Halbperiode (44a) mit dem positiven Zwischenkreisanschlusspunkt (22a) verbunden ist und während einer zweiten Halbperiode (44b) mit dem neutralen Zwischenkreisanschlusspunkt (22b) verbunden ist, sodass die Spannung an dem oberen Zwischenanschlusspunkt (26a) zwischen einer positiven Zwischenkreisspannung und einer neutralen Zwischenkreisspannung umschaltet;
Umschalten des unteren Paares von Ketten (24c, 24d) von Umrichterzellen (16) der ersten Reihe (14) derart, dass der untere Zwischenanschlusspunkt (26b) während der ersten Halbperiode (44a) mit dem neutralen Zwischenkreisanschlusspunkt (22b) verbunden ist und während der zweiten Halbperiode (44b) mit dem negativen Zwischenkreisanschlusspunkt (22c) verbunden ist, sodass die Spannung an dem unteren Zwischenanschlusspunkt (26b) zwischen einer negativen Zwischenkreisspannung und einer neutralen Zwischenkreisspannung umschaltet;
Umschalten der Umrichterzellen (20) der zweiten Reihe (18) derart, dass während jeder Halbperiode (44a, 44b) eine Spannung in Form einer sinusförmigen Halbwelle zwischen dem oberen Zwischenanschlusspunkt (26a) und dem AC-Anschlusspunkt (30) und zwischen dem unteren Zwischenanschlusspunkt (26b) und dem AC-Anschlusspunkt (30) gebildet wird, wobei diese Spannungen durch das Umschalten des oberen Paares von Ketten (24a, 24b) und des unteren Paares von Ketten(24c, 24d) der ersten Reihe (14) derart verschoben werden, dass in Summe eine Spannung in Form einer sinusförmigen Welle an dem AC-Anschlusspunkt (30) gebildet wird.

12. Verfahren nach Anspruch 11,
wobei während eines Übergangszeitfensters (46) zwischen der ersten Halbperiode (44a) und der zweiten Halbperiode (44b) eine durch die Umrichterzellen (16) der ersten Reihe (14) an dem oberen Zwischenanschlusspunkt (26a) und dem unteren Zwischenanschlusspunkt (26b) erzeugte Spannungswellenform ansteigt oder abfällt; und wobei die Umrichterzellen (20) der zweiten Reihe (18) derart geschaltet werden, dass ihre erzeugten Wellenformen abfallen oder ansteigen, sodass sie sich zumindest teilweise mit den Spannungswellenformen an dem oberen Zwischenanschlusspunkt (26a) und dem unteren Zwischenanschlusspunkt (26b) aufheben.

13. Verfahren nach Anspruch 12,
wobei während des Übergangszeitfensters (46) die Spannungswellenform an dem oberen Zwischenanschlusspunkt (26a) und an dem unteren Zwischenanschlusspunkt (26b) eine treppenförmige Form aufweist und/oder die durch die zweite Reihe (18) von Umrichterzellen (20) erzeugte Wellenform eine treppenförmige Form aufweist;
wobei Umrichterzellen (16) der ersten Reihe (14) am Nulldurchgang von Trägersignalen (48) von PWMmodulierten Umrichterzellen (20) der zweiten Reihe (18) geschaltet werden.

14. Verfahren nach einem der Ansprüche 11 bis 13,
wobei die Umrichterzellen (16) der ersten Reihe (14) basierend auf einer Sortierliste geschaltet werden, die derart sortiert ist, dass eine Umschaltreihenfolge der Umrichterzellen (16) Spannungsungleichgewichte reduziert.

## Revendications

1. Convertisseur multiniveau modulaire (10) pour convertir une tension CC en une tension CA, dans lequel le convertisseur multiniveau modulaire (10) comprend une première rangée (14) et une seconde rangée (18) de cellules de convertisseur (16, 20), chaque cellule de convertisseur (16, 20) comprenant
une entrée et une sortie, appelées sorties (38), un condensateur de cellule (C_{cell}, C_{cell}') et des commutateurs à semi-conducteur (34, 36, 34', 36') adaptés pour connecter le condensateur de cellule à une sortie de la cellule de convertisseur (16, 20) et pour contourner le condensateur de cellule ;
dans lequel la première rangée (14) de cellules de convertisseur (16) interconnecte un point de connexion de liaison CC positive (22a) et un point de connexion de liaison CC négative (22c) ;
dans lequel la première rangée (14) de cellules de convertisseur (16) comprend une paire supérieure et une paire inférieure de chaînes connectées en série (24a, 24b, 24c, 24d) de cellules de convertisseur connectées en série (16) ;
dans lequel la paire supérieure de chaînes (24a, 24b) connecte le point de connexion de liaison CC positive (22a) à un point de connexion de liaison CC neutre (22b) et fournit un point de connexion intermédiaire supérieur (26a) entre les chaînes (24a, 24b) ;
dans lequel la paire inférieure de chaînes (24c, 24d) connecte le point de connexion de liaison CC négative (22c) au point de connexion de liaison CC neutre (22b) et fournit un point de connexion intermédiaire inférieur (26b) entre les chaînes (24c, 24d) ;
dans lequel la seconde rangée (18) de cellules de convertisseur (20) comprend une paire de chaînes connectées en série (28a, 28b) de cellules de convertisseur connectées en série (20) interconnectant le point de connexion intermédiaire supérieur (26a) et le point de connexion intermédiaire inférieur (26b) et fournit un point de connexion CA entre les chaînes (28a, 28b) ;
**caractérisé en ce que**
les cellules de convertisseur (16) de la première rangée (14) ont une première capacité de cellule (C_{cell}') et les cellules de convertisseur (20) de la seconde rangée (18) ont une seconde capacité de cellule (C_{cell}) supérieure à la première capacité de cellule (C_{cell}') ; dans lequel les cellules de convertisseur (16) de la première rangée (14) ont un commutateur de condensateur (36'), qui est adapté pour interconnecter le condensateur de cellule (C_{cell}') aux sorties (38) et qui a un courant nominal inférieur à celui d'un commutateur principal (34') des cellules de convertisseur (16) de la première rangée (14), dans lequel le commutateur principal est adapté pour contourner le condensateur de cellule et court-circuiter les sorties (38) de la cellule de convertisseur (16) ;
dans lequel les cellules de convertisseur (20) de la seconde rangée (18) ont un commutateur de condensateur (36) et le courant nominal du commutateur de condensateur (36') d'une cellule de convertisseur (16) de la première rangée (14) est inférieur à un courant nominal du commutateur de condensateur (36) d'une cellule de convertisseur (20) de la seconde rangée (18).

2. Convertisseur (10) selon la revendication 1,
dans lequel la première capacité de cellule (C_{cell}') est inférieure de 20 % à celle de la seconde capacité de cellule (C_{cell}).

3. Convertisseur (10) selon l'une des revendications précédentes,
dans lequel le courant nominal du commutateur de condensateur (36') d'une cellule de convertisseur (16) de la première rangée (14) est inférieur à un courant nominal d'un commutateur principal (34) d'une cellule de convertisseur (20) de la seconde rangée (18).

4. Convertisseur (10) selon l'une des revendications précédentes,
dans lequel le commutateur principal (34') de la cellule de convertisseur (16) de la première rangée (14) est un IGCT et le commutateur de condensateur (36') de la cellule de convertisseur (16) de la première rangée (14) est un IGBT.

5. Convertisseur (10) selon l'une des revendications précédentes,
dans lequel les cellules de convertisseur (16) de la première rangée (14) comprennent une résistance de cellule (R), qui est connectée en série au condensateur de cellule (C_{cell}').

6. Convertisseur (10) selon l'une des revendications précédentes,
dans lequel les cellules de convertisseur (20) de la seconde rangée (18) sont des cellules unipolaires ou cellules bipolaires.

7. Convertisseur (10) selon l'une des revendications précédentes,
dans lequel une chaîne (24a, 24b, 24c, 24d) de cellules de convertisseur (16) de la première rangée (14) et une chaîne (28a, 28b) de cellules de convertisseur (20) de la seconde rangée (18) ont un nombre égal de cellules de convertisseur (16, 20).

8. Convertisseur (10) selon l'une des revendications précédentes,
dans lequel des condensateurs de liaison CC (C_{dc}) interconnectent le point de connexion de liaison CC positive (22a) et le point de connexion de liaison CC négative (22c) au point de connexion de liaison CC neutre (22b).

9. Convertisseur (10) selon l'une des revendications précédentes,
dans lequel deux cellules de convertisseur (16) de la première rangée (14) sont agencées dans un module de puissance (40) fournissant un support mécanique commun pour les deux cellules de convertisseur (16) ; et/ou dans lequel le module de puissance (40) comprend un premier module à demi-pont de commutateurs à semi-conducteur à bas courant (36') et un second demi-pont de commutateurs à semi-conducteur à haut courant (34'), les commutateurs à semi-conducteur à bas courant (36') ayant un courant nominal inférieur à celui des commutateurs à semi-conducteur à haut courant (34') ;
dans lequel les demi-ponts sont interconnectés à deux condensateurs de cellule (C_{cell}') de telle sorte que les deux commutateurs à semi-conducteur à bas courant (36') forment deux commutateurs de condensateur pour interconnecter le commutateur du condensateur de cellule respectif (C_{cell}') à la sortie (38) du module de puissance (40).

10. Convertisseur (10) selon l'une des revendications précédentes,
dans lequel un commutateur de dérivation (32) est connecté en parallèle à deux, ou plus, cellules de convertisseur (16) de la première rangée (14) ; et/ou dans lequel une cellule de convertisseur (16) de la première rangée (14) et/ou une cellule de convertisseur (20) de la seconde rangée (18) et/ou un module de puissance (40) avec deux, ou plus, cellules de convertisseur (16, 20) a un élément de dérivation pour contourner une ou plusieurs cellules de convertisseur défaillantes.

11. Procédé de fonctionnement du convertisseur (10) selon l'une des revendications précédentes, le procédé comprenant :
la commutation de la paire supérieure de chaînes (24a, 24b) de cellules de convertisseur (16) de la première rangée (14) de telle sorte que, durant une première demi-période (44a), le point de connexion intermédiaire supérieur (26a) soit connecté au point de connexion de liaison CC positive (22a) et, durant un seconde demi-période (44b), soit connecté au point de connexion de liaison CC neutre (22b), de telle sorte que la tension au point de connexion intermédiaire supérieur (26a) commute entre une tension de liaison CC positive et une tension de liaison CC neutre ;
la commutation de la paire inférieure de chaînes (24c, 24d) de cellules de convertisseur (16) de la première rangée (14) de telle sorte que, durant la première demi-période (44a), le point de connexion intermédiaire inférieur (26b) soit connecté au point de connexion de liaison CC neutre (22b) et, durant la seconde demi-période (44b), soit connecté au point de connexion de liaison CC négative (22c), de telle sorte que la tension au point de connexion intermédiaire inférieur (26b) commute entre une tension de liaison CC négative et une tension de liaison CC neutre ;
la commutation des cellules de convertisseur (20) de la seconde rangée (18) de telle sorte que, durant chaque demi-période (44a, 44b), une tension sous forme de demi-onde sinusoïdale soit formée entre le point de connexion intermédiaire supérieur (26a) et le point de connexion CA (30) et entre le point de connexion intermédiaire inférieur (26b) et le point de connexion CA (30), lesquelles tensions sont décalées par la commutation de la paire supérieure de chaînes (24a, 24b) et de la paire inférieure de chaînes (24c, 24d) de la première rangée (14), de telle sorte que, en somme, une tension sous forme d'onde sinusoïdale soit formée au point de connexion CA (30).

12. Procédé selon la revendication 11,
dans lequel, durant une fenêtre temporelle de transition (46) entre la première demi-période (44a) et la seconde demi-période (44b), une forme d'onde de tension générée au point de connexion intermédiaire supérieur (26a) et au point de connexion intermédiaire inférieur (26b) par les cellules de convertisseur (16) de la première rangée (14) est en pente ascendante ou descendante ; et
dans lequel les cellules de convertisseur (20) de la seconde rangée (18) sont commutées de telle sorte que leurs formes d'onde générées soient en pente descendante ou ascendante, pour au moins partiellement annuler les formes d'onde de tension au point de connexion intermédiaire supérieur (26a) et au point de connexion intermédiaire inférieur (26b).

13. Procédé selon la revendication 12,
dans lequel, durant la fenêtre temporelle de transition (46), la forme d'onde de tension au point de connexion intermédiaire supérieur (26a) et au point de connexion intermédiaire inférieur (26b) a une forme d'escalier et/ou la forme d'onde générée par la seconde rangée (18) de cellules de convertisseur (20) a une forme d'escalier ;
dans lequel des cellules de convertisseur (16) de la première rangée (14) sont commutées au passage par zéro de signaux porteurs (48) de cellules de convertisseur modulées PWM (20) de la seconde rangée (18).

14. Procédé selon l'une des revendications 11 à 13,
dans lequel les cellules de convertisseur (16) de la première rangée (14) sont commutées sur la base d'une liste de triage, qui est triée de telle sorte qu'un ordre de commutation des cellules de convertisseur (16) réduise des déséquilibres de tension de cellule.
